# EUROPEAN PATENT SPECIFICATION

(11) **EP 3 548 262 B1**
(45) Date of publication and mention of the grant of the patent: **07.10.2020**
(21) Application number: 17803948.3
(22) Date of filing: 23.11.2017
(51) Int. Cl.: B29C 70/46, B32B 15/14, B29C 33/00, B29B 11/12, B29B 11/16, B29C 70/02, B32B 7/12

(54) **FIBRE-REINFORCED PREFORM WITH SERRATED EDGE**
FASERVERBUNDVORFORMLING MIT ZAHNFÖRMIGER KANTE
PRÉFORME À BORD ENDENTÉ EN MATÉRIAU RENFORCÉ DE FIBRES

(30) Priority: 01.12.2016 EP 16201708
(43) Date of publication of application: 09.10.2019
(73) Proprietor: Hexcel Holding GmbH, 4061 Pasching (AT)
(72) Inventor: MOSER, Johannes, 4061 Pasching (AT); GABOR, Andreas, 4061 Pasching (AT)
(74) Representative: Eddowes, Simon
(86) International application number: PCT/EP2017/080282
(87) International publication number: WO 2018/099809

(56) References cited:
- EP-A1- 2 572 866
- DE-A1- 10 157 655
- GB-A- 409 186

## Description

This invention relates to improvements in or relating to moulding and in particular relates to improvements in compression moulding.

Compression moulding has been known and widely used for many years and is used in the production of a wide range of articles. It is desirable that the mouldings are as uniform as possible and have the desired physical properties across the entire cross section of the moulding. However in order to produce the mouldings it is necessary firstly to place the material within the mould and then to bring the elements of the mould together to exert pressure on the moulding material and to force the material to the extremities of the mould. As the mould elements of the mould are brought together gas (air, or other fluid) between the elements will be forced out towards the sides of the mould. In certain situations particularly with the production of complicated shaped mouldings these fluids cannot escape and they may be intermingled with the edges of the moulding material resulting in irregularities and faults in the edges of the moulding that is produced leading to reduced performance of the moulding. This problem can be particularly acute in the production of mouldings from fibre reinforced thermosetting resins which are often moulded as stacks of layers of the fibre reinforced thermosetting resins and more so if the mouldings are of complicated structure.

Compression moulding processes are for instance known from DE10157655 and EP2572866.

The present invention provides a solution these problems by providing a moulding system according to claim 1 and the use of a moulding material in said system of claim 1 according to claim 9.

According to the disclosure there is provided a system, a mould, and a preform as defined in any one of the accompanying claims.

In an embodiment, there is provided a moulding system comprising a mould cavity containing a moulding material to be moulded under pressure, a recess being provided at the edge of the moulding material to allow the escape of entrapped gas from within the mould cavity during moulding of the moulding material under pressure.

The moulding system may comprise a mould, the mould comprising at least two corresponding mould elements moveable relative to one another towards and away from each other, the towards movement exerting pressure on a moulding material positioned within a cavity formed within the mould, wherein upon the mould elements being in contact the mould cavity comprises a recess, the recess being located beyond the edge of the moulding material to allow escape of gas during moulding.

The moulding material for use in a system as hereinbefore described comprises a preformed thermosetting material such as a prepreg wherein the preform is shaped to provide one or more channels at its edges to provide a recess to allow the escape of air beyond the extremity of the preform during moulding.

The channels are in the form of a wavy edge or serration or corrugation. In a preferred embodiment, the preform comprises multiple layers and the wavy edge or serration or corrugation is provided in one or more layers of the preform. Preferably, the wavy edge or serration or corrugation is provided in a bonding layer and more preferably only in the bonding layer.

The preform preferably comprises a bonding layer containing an adhesive for bonding the preform to a substrate.

The preform may comprise a fibrous material such as carbon fibre, glass fibre or aramid fibre, embedded in a matrix of a thermosetting resin such as epoxy resin or a polyester resin containing a curing agent for the resin.

In an embodiment of the invention the moulding material comprises a preform comprising a corrugation extending at its edge beyond the extremity of the preform to permit flow of gas into the recess formed by the corrugation and the cavity during moulding.

The moulding material comprises layers of different materials. In one embodiment the moulding material comprises a layer for bonding the moulding material to a metal layer.

In a further embodiment, the moulding material comprises a plurality of partially or fully cured layers of a fibre reinforced sheet material.

In another embodiment, the mould is capable of being heated so that it can cure a thermosetting material. In a further embodiment, there is provided a preform comprising a curable thermosetting resin, the preform having corrugated edges. The preform may comprise a fibrous material embedded in a matrix of a thermocurable resin such as a material commonly known as a prepreg.

In an embodiment, the preform comprises a prepreg and an adhesive layer provided on one or both surfaces of the prepreg the adhesive layer having corrugated edges. The adhesive layer is adapted to bond the preform to a metal.

The preform may comprise a resin impregnated fibrous reinforcement layer, an adhesive layer and a metal layer.

The preform may be used as the moulding material in any of the embodiments as described herein.

The disclosure invontion therefore provides a mould for the moulding of flowable materials that subsequently solidify within the mould comprising at least two mould elements moveable relative to one another towards and away from each other, the towards movement together exerting pressure on a moulding material positioned within the mould, wherein at least one of the elements is provided with a recess at its extremity beyond the edge of the moulding to allow escape of air as the elements exert pressure on the moulding material within the mould.

The mould is capable of being heated.

In an alternative embodiment there is provided a method comprising moulding a preformed thermosetting material such as a prepreg comprising a fibrous material such as carbon fibre, glass fibre or aramid fibre, embedded in a matrix of a thermosetting resin such as epoxy resin or a polyester resin typically containing a heat activated hardener (curing agent) for the resin, the preformed thermoset material being shaped so that it provides one or more channels at its edges to allow the escape of gas beyond the extremity of the preform during moulding, In this embodiment the invention further provides a preform comprising a curable thermosetting resin, the preform having corrugated edges.

It is preferred that the preform be a fibrous material embedded in a matrix of a thermocurable resin such as a material commonly known as a prepreg. The preform may also comprise unimpregnated fibrous reinforcement (dry fibrous reinforcement). The preform may also comprise a combination of prepreg an dry fibrous reinforcement.

In a further alternative method comprising moulding a preform a further layer is provided on at least one side of the preform within the mould and the further layer is provided with corrugations, preferably at its edges extending beyond the extremity of the preform in order to permit flow of air into the spaces formed by the corrugations during the moulding process.

In these embodiments spaces are provided within the mould cavity to allow gas that is entrapped by the moulding process to escape beyond the boundaries of the moulding. The space required will depend upon the size and shape of the moulding and the nature of the fibrous material and curable resin matrix. For example, the fibrous material may be a woven material which may be tightly or loosely woven, the loosely woven material may contain more gas and accordingly a larger space may be required for evacuation of any entrapped gas. In many instances preforms such as prepregs are stacked in a mould prior to moulding and curing, and the larger the stack the greater the potential for entrapped gas and a greater space may be needed to enable it to be evacuated.

The amount of entrapped gas and the ability to remove it according to this invention also depends upon the complexity of the shape of the part being produced and the complexity of the mould that is required.

Generally, the more complex the shape of the part the more difficult it is to remove entrapped gas such as air and with mouldings of more complicated shape, it is preferred to use an alternative embodiment of the invention, the superimposed adhesive film layer.

The invention is also useful in the formation of mouldings from layers of different materials. For example it may be used in the bonding of metal layers to prepregs in particular to produce materials useful as automobile and aerospace components by means of an adhesive layer. In an embodiment the preform comprises an adhesive layer which may be provided with corrugations at its edges which provide the space for evacuation of the entrapped gas.

It is known in the art that bent fibres, linear distortion, wrinkles or humps of fibres in a fibre reinforced composite material greatly degrade the mechanical properties, particularly the strength and E-modulus of the composite. Manufacturing of composites with highly aligned fibres is therefore very desirable. Particularly in VARTM lay ups containing dry fibre layers, maintaining fibre alignment during both lay-up and processing is a problem. The present invention helps maintain fibre alignment by reducing the likelihood of the alignment being disturbed by gas entrapped between the fibres.

Cured or partly cured woven or non-woven fibre reinforced sheet material having weft and wrap fibres are sometimes used as interlayers in a preform in the form of a stack of one or more prepregs particularly if the prepreg contains unidirectional fibres. Laminate parts may be formed from any combination of one or more layers of prepreg, dry fibrous material and fibre reinforced sheet material. Each layer may contain gas that can be evacuated by the techniques of this invention.

In an embodiment a lay-up within the mould contains a plurality of partially or fully cured layers of a fibre reinforced sheet material. In a preferred embodiment these layers are laid up with interlayers of a material containing weft and wrap fibres which ensures that the alignment of the fibres within the prepregs in the stack is retained. This invention enables gas to be evacuated from the stack.

The use of partially or fully cured fibre reinforced sheet material allows for the production of articles of very high fibre content and from large stacks of materials with highly aligned fibres in the sheets. In addition, the combination of the sheet shape with the cured state facilitates adjustment of the sheets to the shape of the mould without compromising the alignment, or in other words the straightness, of the fibres in the lay-up forming the composite member or part. This is particularly important to complex shapes such as an airfoil of wind turbine blade, where the desired fibre distribution is a complicated three-dimensional shape. The use of this disclosure has been found to improve the uniformity of the properties of such materials. The structural fibres may comprise cracked (i.e. stretch-broken), selectively discontinuous or continuous fibres. The structural fibres may be made from a wide variety of materials, such as carbon, graphite, glass, metalized polymers, aramid and mixtures thereof. Glass and carbon fibres are preferred carbon fibre, being preferred for wind turbine shells of length above 40 metres such as from 50 to 60 metres. The structural fibres may be individual tows made up of a multiplicity of individual fibres and they may be woven or non-woven fabrics. The fibres may be unidirectional, bidirectional or multidirectional according to the properties required in the final laminate. Typically the fibres will have a circular or almost circular cross-section with a diameter in the range of from 3 to 20 µm, preferably from 5 to 12 µm.

Exemplary layers of unidirectional structural fibres are made from HexTow® carbon fibres, which are available from Hexcel Corporation. Suitable HexTow® carbon fibres for use in making unidirectional fibre layers include: IM7 carbon fibres, which are available as fibres that contain 6,000 or 12,000 filaments and weight 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

The thermosetting material may comprise a resin composition. The resin composition comprises one or more resin components in combination with a curing agent. Preferably, the resin component comprises an epoxy resin.

The reactivity of an epoxy resin is indicated by its epoxy equivalent weight (EEW) the lower the EEW the higher the reactivity. The epoxy equivalent weight can be calculated as follows: (Molecular weight epoxy resin)/(Number of epoxy groups per molecule). Another way is to calculate with epoxy number that can be defined as follows: Epoxy number = 100/epoxy eq. weight. To calculate epoxy groups per molecule: (Epoxy number x mol. weight)/100. To calculate mol. weight: (100 x epoxy groups per molecule)/epoxy number. To calculate mol. weight: epoxy eq. weight x epoxy groups per molecule.

The epoxy resin has a high reactivity as indicated by an EEW in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para- aminophenol) and MY0600 and MY0610 (triglycidyl meta-aminophenol). Triglycidyl meta-aminophenol is also available from Sumitomo Chemical Co. (Osaka, Japan) under the tradename ELM-120.Suitable tetrafunctional epoxy resins include N,N, N',N'-tetraglycidyl-m- xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

As mentioned the layers used in the present disclosure may form a stack of prepregs which is cured in the mould to produce a finished article. Prepreg is the term used to describe fibres and fabric impregnated or in combination with a resin in the uncured state and ready for curing. The fibres may be in the form of tows or fabrics and a tow generally comprises a plurality of thin fibres called filaments. The fibrous materials and resins employed in the prepregs will depend upon the properties required of the cured fibre reinforced material and also the use to which the cured laminate is to be put. The fibrous material is described herein as structural fibre. The resin may be combined with fibres or fabric in various ways. The resin may be tacked to the surface of the fibrous material. The resin may partially or completely impregnate the fibrous material. The resin may impregnate the fibrous material so as to provide a pathway to facilitate the removal of gas such as air during processing of the prepreg material.

The fibres in the prepreg may be unidirectional fibres oriented parallel to the length of the cured fibre-reinforced sheet material. This provides for very high strength and stiffness in the length of the cured fibre reinforced sheet material. Other orientations or combinations of orientations may be suitable in some applications. Examples of other suitable orientations are bi-axial fibres oriented at +-45°, +-30°, or 0-90° relative to the length of the sheet material; and triaxial fibres oriented at +-45° and in the length of the sheet material. Such orientations increase the edgewise and/or twisting strength and stiffness of the composite material.

From an economic point of view it is desirable that the moulding cycle time be as short as possible. As well as requiring heat to enhance curing of the resin, the curing reaction itself is exothermic and this needs to be taken into account in the time/temperature curing cycle in particular for the curing of large and thick stacks of prepregs as is increasingly the case with the production of laminates for industrial application where large amounts of epoxy resin are employed and high temperatures can be generated within the stack due to the exotherm of the resin curing reaction. Excessive temperatures are to be avoided as they can damage the mould reinforcement or cause some decomposition of the resin. Excessive temperatures can also cause loss of control over the cure of the resin leading to run away cure.

The invention is illustrated by reference to the accompanying drawings in which
Figure 1 shows a diagrammatic view of a first moulding process and
Figure 2 shows a diagrammatic view of a moulding process according to an embodiment of the present invention.
Figure 3 shows a cured preform comprising no serrations (a) and a preform comprising serrations (b) according to embodiments of the invention.

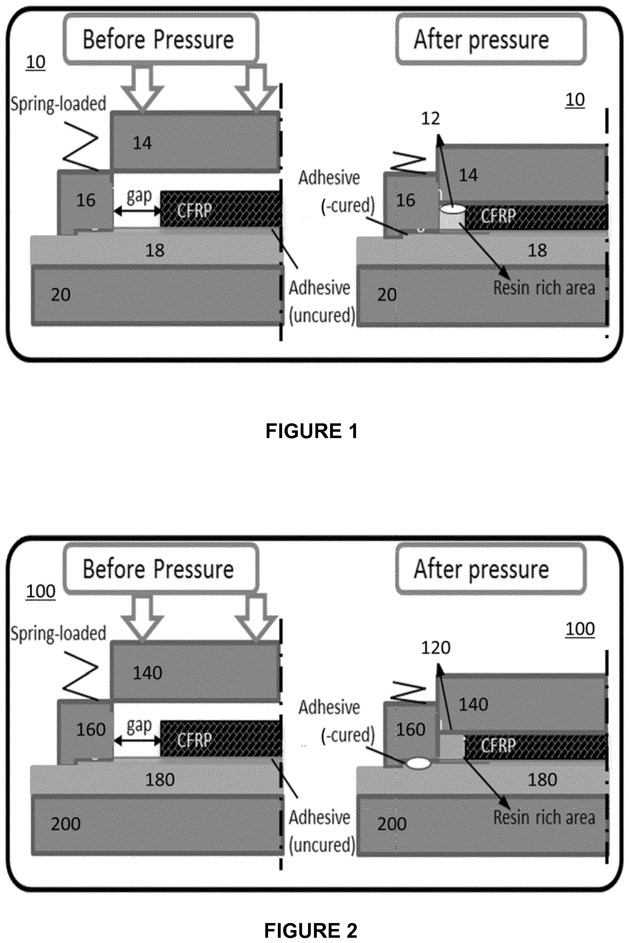

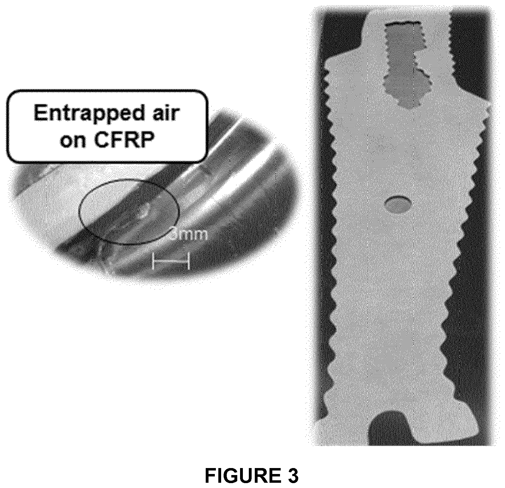

Figure 1 shows part of a conventional moulding system (10) comprising a mould cavity formed by mould elements (14, 16, 18, 20) containing a moulding material (carbon fiber reinforced plastic, CFRP) being moulded under pressure. Mould element (18) is a metal layer. The cavity is enclosed when the mould is closed and all elements (14, 16, 18, 20) have moved towards one another so that upon the application of pressure and heat causing the resin in the moulding material to flow and cure filling any cavities in the mould cavity with resin and gas (12) in the form of air is entrapped in the cured moulding material (Figure 1 and Figure 3(a)). This reduces the mechanical performance (tensile strength and interlaminar shear strength) of the cured moulding material.

Figure 2 shows part of a moulding system (100) according to the invention which comprises a mould cavity containing a moulding material (CFRP) being moulded under pressure, a recess being provided at the edge of the moulding material (CFRP) to allow the escape of entrapped gas from within the mould cavity. In this way entrapped gas in the form can escape the closed cavity

The mould in Figure 2 comprises corresponding mould elements (140, 160, 180, 200) moveable relative to one another towards and away from each other, the towards movement exerting pressure on a moulding material (CFRP) positioned within a cavity formed with the mould wherein upon the mould elements (140, 160, 180, 200) being in contact the mould cavity comprises a recess (120), the recess (120) being located beyond the edge of the moulding to allow escape of gas during moulding.

Figure 3(a) shows a conventional moulding material which has a straight edge. This material is used in the moulding system as shown in Figure 1. Figure 3(b) shows a moulding material.

This moulding material comprises a preform of a preformed thermosetting material wherein the preform is shaped to provide one or more channels at its edges to provide one or more recesses to allow the escape of gas beyond the extremity of the preform during moulding. The channels are in the form of a serration.

## Claims

1. A moulding system (100) comprising a mould cavity containing a moulding material to be moulded under pressure, one or more recesses (120) being provided at the edge of the moulding material to allow the escape of entrapped gas from within the mould cavity during moulding of the moulding material under pressure; wherein the moulding material comprises a preformed thermosetting material comprising a reinforcement part and a bonding part for bonding the reinforcement part to a substrate, the recess (120) being provided at the edge of the bonding part, **characterised in that** the preform is shaped to provide one or more channels at its edges to provide the one or more recesses (120) to allow the escape of air beyond the extremity of the preform during moulding.

2. A moulding system (100) according to claim 1, wherein the channels are in the form of a wavy edge or serration or corrugation.

3. A moulding system (100) according to claim 1 or claim 2, wherein the recess (120) is only provided beyond the edge of the bonding part.

4. A moulding system (100) according to any preceding claim, wherein the reinforcement part comprises one or more layers of a fibrous reinforcement material which is impregnated with a reinforcement resin material.

5. A moulding system (100) according to Claim 4 wherein the moulding material comprises a layer for bonding the moulding material to a metal layer.

6. A moulding system (100) according to any of the preceding claims wherein the preform comprises a serration or wavy lip extending at its edge beyond the extremity of the preform to permit flow of air into the recess (120) formed by the serration or wavy lip and the cavity during moulding.

7. A moulding system (100) according to any of the preceding claims wherein the moulding material is contained within a cavity formed by mould elements (140, 160, 200) and a metal layer (180).

8. A moulding system (100) according to any of the preceding claims wherein the mould is capable of being heated so that it can soften a thermoplastic material or cure a thermosetting material.

9. The use of a moulding material in a system according to any of claims 1 to 8, wherein the moulding material comprises a preformed thermosetting material such as a prepreg wherein the preform is shaped to provide one or more channels at its edges to provide one or more recesses to allow the escape of air beyond the extremity of the preform during moulding.

10. The use of a preform in a system according to any of claims 1 to 8, wherein the preform comprises a curable thermosetting resin, the preform having a serrated edge or wavy lip or corrugated edges.

11. The use according to claim 10, wherein the preform comprises a fibrous material embedded in a matrix of a thermocurable resin such as a material commonly known as a prepreg.

12. The use according to claim 10 or claim 11, wherein the preform comprise a prepreg and an adhesive layer provided on one or both surfaces of the prepreg the adhesive layer having serrations or a wavy lip or wavy edge.

13. The use according to claim 12, wherein the adhesive layer is adapted to bond the preform to a metal.

14. The use according to any of claims 10 to 13, wherein the preform comprises a resin impregnated fibrous reinforcement layer, an adhesive layer and a metal layer.

## Patentansprüche

1. Formsystem (100), umfassend einen Formenhohlraum, der eine Formmasse enthält, die unter Druck zu formen ist, eine oder mehrere Aussparungen (120), die am Rand der Formmasse bereitgestellt sind, um ein Entweichen von eingeschlossenem Gas aus dem Inneren des Formenhohlraums während eines Formens der Formmasse unter Druck zu ermöglichen; wobei die Formmasse ein vorgeformtes Duroplast umfassend einen Verstärkungsteil und einen Verbindungsteil zum Verbinden des Verstärkungsteils mit einem Trägermaterial umfasst, wobei die Aussparung (120) am Rand des Verbindungsteils bereitgestellt ist, **dadurch gekennzeichnet, dass** die Vorform derart geformt ist, dass ein oder mehr Kanäle an ihren Rändern bereitgestellt sind, um die eine oder mehreren Aussparungen (120) bereitzustellen, um das Entweichen von Luft über das äußerste Ende der Vorform hinaus während eines Formens zu ermöglichen.

2. Formsystem (100) nach Anspruch 1, wobei die Kanäle in Form eines Wellenrands oder einer Auszackung oder einer Riffelung sind.

3. Formsystem (100) nach Anspruch 1 oder Anspruch 2, wobei die Aussparung (120) nur hinter dem Rand des Verbindungsteils bereitgestellt ist.

4. Formsystem (100) nach einem der vorhergehenden Ansprüche, wobei der Verstärkungsteil eine oder mehrere Schichten eines fasrigen Verstärkungsmaterials umfasst, das mit einem Verstärkungsharzmaterial imprägniert ist.

5. Formsystem (100) nach Anspruch 4, wobei die Formmasse eine Schicht zum Verbinden der Formmasse mit einer Metallschicht umfasst.

6. Formsystem (100) nach einem der vorhergehenden Ansprüche, wobei die Vorform eine Auszackung oder Wellenkante umfasst, die sich an ihrem Rand über das äußerste Ende der Vorform hinaus erstreckt, um ein Strömen von Luft in die durch die Auszackung oder Wellenkante gebildete Aussparung (120) und den Hohlraum während eines Formens zu ermöglichen.

7. Formsystem (100) nach einem der vorhergehenden Ansprüche, wobei die Formmasse in einem durch Formelemente (140, 160, 200) und eine Metallschicht (180) gebildeten Hohlraum enthalten ist.

8. Formsystem (100) nach einem der vorhergehenden Ansprüche, wobei die Form erwärmt werden kann, sodass sie ein Duroplast erweichen oder ein Duroplast aushärten kann.

9. Verwendung einer Formmasse in einem System nach einem der Ansprüche 1 bis 8, wobei die Formmasse ein vorgeformtes Duroplast wie beispielsweise ein Prepreg umfasst, wobei die Vorform derart geformt ist, dass ein oder mehr Kanäle an ihren Rändern bereitgestellt sind, um eine oder mehrere Aussparungen bereitzustellen, um das Entweichen von Luft über das äußerste Ende der Vorform hinaus während eines Formens zu ermöglichen.

10. Verwendung einer Vorform in einem System nach einem der Ansprüche 1 bis 8, wobei die Vorform ein aushärtbares Duroplastharz umfasst, wobei die Vorform einen ausgezackten Rand oder eine Wellenkante oder geriffelte Ränder umfasst.

11. Verwendung nach Anspruch 10, wobei die Vorform ein fasriges Material umfasst, das in eine Matrix eines thermisch aushärtbaren Harzes eingebettet ist, wie beispielsweise ein Material, das allgemein als Prepreg bekannt ist.

12. Verwendung nach Anspruch 10 oder Anspruch 11, wobei die Vorform ein Prepreg und eine Klebeschicht umfasst, die an einer oder beiden Flächen des Prepreg bereitgestellt sind, wobei die Klebeschicht Auszackungen oder eine Wellenkante oder einen Wellenrand umfasst.

13. Verwendung nach Anspruch 12, wobei die Klebeschicht ausgelegt ist, die Vorform mit einem Metall zu verbinden.

14. Verwendung nach einem der Ansprüche 10 bis 13, wobei die Vorform eine imprägnierte fasrige Harzverstärkungsschicht, eine Klebeschicht und eine Metallschicht umfasst.

## Revendications

1. Système de moulage (100) comprenant une cavité de moule contenant un matériau de moulage à mouler sous pression, un ou plusieurs évidements (120) étant prévus sur le bord du matériau de moulage de sorte à permettre la fuite du gaz piégé de l'intérieur de la cavité de moule pendant le moulage du matériau de moulage sous pression ; dans lequel le matériau de moulage comprend un matériau thermodurcissable préformé comprenant une partie de renforcement et une partie de liaison pour lier la partie de renforcement à un substrat, l'évidement (120) étant prévu au bord de la partie de liaison, **caractérisé en ce que** la préforme est formée de manière à fournir un ou plusieurs canaux à ses bords pour fournir l'un ou plusieurs évidements (120) pour permettre la fuite de l'air au-delà de l'extrémité de la préforme pendant le moulage.

2. Système de moulage (100) selon la revendication 1, dans lequel les canaux se présentent sous la forme d'un bord ondulé ou d'une dentelure ou ondulation.

3. Système de moulage (100) selon la revendication 1 ou la revendication 2, dans lequel l'évidement (120) n'est prévu qu'au-delà du bord de la partie de liaison.

4. Système de moulage (100) selon l'une quelconque des revendications précédentes, dans lequel la partie de renforcement comprend une ou plusieurs couches d'un matériau de renforcement fibreux qui est imprégné d'un matériau de renforcement à base de résine.

5. Système de moulage (100) selon la revendication 4, dans lequel le matériau de moulage comprend une couche pour lier le matériau de moulage à une couche métallique.

6. Système de moulage (100) selon l'une quelconque des revendications précédentes, dans lequel la préforme comprend une dentelure ou une lèvre ondulée s'étendant à son bord au-delà de l'extrémité de la préforme pour permettre l'écoulement de l'air dans l'évidement (120) formé par la dentelure ou la lèvre ondulée et la cavité pendant le moulage.

7. Système de moulage (100) selon l'une quelconque des revendications précédentes, dans lequel le matériau de moulage est contenu dans une cavité formée par des éléments de moule (140, 160, 200) et une couche métallique (180).

8. Système de moulage (100) selon l'une quelconque des revendications précédentes, dans lequel le moule peut être chauffé de manière à ramollir un matériau thermoplastique ou à durcir un matériau thermodurcissable.

9. Utilisation d'un matériau de moulage dans un système selon l'une quelconque des revendications 1 à 8, dans lequel le matériau de moulage comprend un matériau thermodurcissable préformé tel qu'un préimprégné dans lequel la préforme est formée de manière à fournir un ou plusieurs canaux sur ses bords afin de fournir un ou plusieurs évidements pour permettre la fuite de l'air au-delà de l'extrémité de la préforme durant le moulage.

10. Utilisation d'une préforme dans un système selon l'une quelconque des revendications 1 à 8, dans lequel la préforme comprend une résine thermodurcissable et polymérisable, la préforme ayant un bord dentelé ou une lèvre ondulée ou des bords ondulés.

11. Utilisation selon la revendication 10, dans laquelle la préforme comprend un matériau fibreux intégré dans une matrice de résine thermodurcissable telle qu'un matériau communément appelé préimprégné.

12. Utilisation selon la revendication 10 ou la revendication 11, dans laquelle la préforme comprend un préimprégné et une couche adhésive fournie sur une surface ou les deux surfaces du préimprégné, la couche adhésive ayant des dentelures ou une lèvre ondulée ou un bord ondulé.

13. Utilisation selon la revendication 12, dans laquelle la couche adhésive est conçue pour coller la préforme à un métal.

14. Utilisation selon l'une quelconque des revendications 10 à 13, dans laquelle la préforme comprend une couche de renforcement fibreuse imprégnée de résine, une couche adhésive et une couche métallique.
